# EUROPÄISCHE PATENTANMELDUNG

(11) **EP 2 555 097 A1**
(43) Veröffentlichungstag der Anmeldung: **06.02.2013**
(21) Anmeldenummer: 11176702.6
(22) Anmeldetag: 05.08.2011
(51) Int. Cl.: G06F 3/048

(54) **Methode und Vorrichtung zur Bestimmung eines Bildausschnitts und Auslösen einer Bilderfassung mittels einer einzigen berührungsbasierten Geste**

(71) Anmelder: prisma - Gesellschaft für Projektmanagement & Informationssysteme mbH, 12055 Berlin (DE)
(72) Erfinder: Jaenchen, Tobias, 14165 Berlin (DE); Krotki, Martin, 13187 Berlin (DE); On, Vinh-Hieu, 10117 Berlin (DE)
(74) Vertreter: Lange, Sven

(57) **Zusammenfassung**

Methode zur Bestimmung eines Bildausschnitts und Durchführung einer Bilderfassung mit einer Kamera, aufweisend einen Bildschirm und eine berührungsempfindliche Oberfläche mit Multi-Touch-Funktion, mittels einer einzigen berührungsbasierten Geste, wobei a) die Kamera auf ein Motiv gerichtet und b) ein Bild des Motivs auf dem Bildschirm angezeigt, c) der gewünschte Bereich des Motivs mit der berührungsbasierten Geste auf der genannten Oberfläche markiert und die Bilderfassung durch Beenden der genannten Geste ausgelöst wird.

## Beschreibung

Die Erfindung betrifft eine Methode zur Bestimmung eines Bildausschnittes und Durchführung einer Bilderfassung mit einer Kamera sowie eine Vorrichtung mit ausführbarem Computerprogramm zur Bestimmung eines Bildausschnittes und Durchführung einer Bilderfassung.

Im Stand der Technik sind verschiedene Verfahren zur Bestimmung eines Bildausschnittes kombiniert mit der Erfassung des ausgeschnittenen Bildes bekannt. Bilderfassungsgeräte sind beispielsweise in Kameras oder anderen elektronischen Geräten implementiert. Die Kameras können beispielsweise Bestandteil von Smartphones, Tablet Computern, Laptops, Computern oder Bildschirmen sein. Die genannten Bilderfassungsgeräte können dazu verwendet werden, ein Motiv so abzubilden, dass ausschließlich der gewünschte Ausschnitt des Motivs ohne dessen Umgebung erfasst wird. Im Stand der Technik sind verschiedene Verfahren offenbart, die in Bilderfassungsgeräten ablaufen. Ein häufig eingesetztes Verfahren ist eines, welches Vergrößerungsfunktionen nutzt. Voraussetzung sind Bedienelemente für die Vergrößerung bzw. Verkleinerung des Kameraerfassungsbereichs, die entweder physisch vorliegen oder auf dem berührungsempfindlichen Bildschirm eingeblendet werden können. Der Benutzer des Geräts kann hierdurch das gewünschte Motiv erfassen, indem er die Kamera des Geräts auf das gewünschte Motiv richtet. Nach Erfassung des Motivs kann das Kamerabild durch Betätigung der Bedienelemente beliebig durch Vergrößern oder Verkleinern skaliert werden. Falls erforderlich, muss die Ausrichtung der Kamera durch den Benutzer nachjustiert werden, insbesondere wenn sich das Motiv nicht in der Mitte des Kameraerfassungsbereichs befindet. Der Justierprozess wird so oft wiederholt, bis sich das Motiv in der gewünschten Größe und Position im Bilderfassungsbereich befindet. Die endgültige Auslösung der Bilderfassung erfolgt durch den Benutzer durch im Stand der Technik bekannte Bedienelemente.

In einem weiteren bekannten System bzw. in einem weiteren bekannten Verfahren wird ein berührungsempfindlicher Bildschirm eingesetzt, auf dem ein

Auswahlrahmen zur Bestimmung des gewünschten Bildausschnittes eingeblendet wird. Dazu richtet der Benutzer das Bilderfassungsgerät zunächst auf das gewünschte Motiv, so dass die Kamera des Geräts das Motiv erfasst. Danach aktiviert der Benutzer den Modus zur Auswahl des Bildausschnitts durch die Betätigung eines vorgesehenen Bedienelements. Die Begrenzung des Bildausschnittes wird durch den eingeblendeten Auswahlrahmen dargestellt. Der Benutzer kann den Auswahlrahmen durch Berührung und Bewegung der Ecken in der Position oder in der Größe ändern. Hat der Benutzer die gewünscht Bereichsmarkierung eingestellt, löst er durch die Betätigung eines dafür vorgesehenen Bedienelementes die Bildaufnahme aus. Derartige Verfahren arbeiten mit Algorithmen, die dem Fachmann bekannt sind. Diese Algorithmen sind Teil eines Systems bzw. eines Verfahrens, welches das technische Problem der Bestimmung und der Erfassung des ausgewählten Bildausschnittes lösen.

Die bekannten Systeme, Vorrichtungen und Verfahren weisen jedoch zahlreiche Nachteile auf.

Die bisherigen Verfahren erfordern die Ausführung vieler und unterschiedlicher manueller Benutzerinteraktionen, um einen gewünschten Bildausschnitt zu bestimmen und die Bilderfassung auszulösen. Mit der Vielzahl manueller Schritte, die der Benutzer ausführen muss, erhöhen sich der Gesamtzeitaufwand und die Komplexität der Bedienführung.

Ein hoher Zeitaufwand kann negative Auswirkungen auf das Erfassungsresultat haben, wenn die Aufnahmesituation während des Ausführungsprozesses nicht statisch ist. Eine solche zeitkritische Aufnahmesituation liegt vor, wenn der Inhalt des Motivs über die Zeit variiert oder sich die Erfassungsperspektive und Entfernung des Benutzers relativ zum Motiv durch eine Positionsänderung verschiebt. Aus den genannten Gründen kann zum Zeitpunkt der tatsächlichen Auslösung der Bilderfassung die Aufnahmesituation so stark von der Ausgangssituation abweichen, dass der Benutzer die Erfassungsprozedur vorzeitig beendet oder er eine für ihn nicht weiter verwertbare Aufnahme erhält.

Ein weiterer Punkt, den der Gesamtzeitaufwand zur Ausführung des Verfahrens direkt beeinflusst, ist die Anzahl der Ausführungen, die der Benutzer innerhalb eines betrachteten Zeitraums vollziehen kann. Je mehr Zeit der Nutzer mit der Ausführung einer Aufnahme bzw. der Vorbereitung des ersten Auslösens verbringt, desto weniger Aufnahmen kann er in einem bestimmten Zeitraum tätigen.

Die Erhöhung der Verfahrenskomplexität erschwert und verlängert das Erlernen der Bedienung durch den Benutzer. Des Weiteren wird das Verfahren dadurch fehleranfälliger, da jede manuelle Interaktion unbeabsichtigte und ungewünschte Nebeneffekte auslösen kann. Beispielsweise wäre jede Betätigung von Bedienelementen mit einer Bewegung und Berührung durch den Benutzer verbunden. Dadurch kann sich jedes Mal die Position und Ausrichtung des Bilderfassungsgeräts ungewollt verändern. Die zusätzlich notwendige Nachjustierung führt wiederum zu einer Anhebung des Gesamtzeitaufwandes.

Ein weiterer wichtiger Aspekt ist die Akzeptanz der Verfahren durch den Benutzer. Hierbei kann die erhöhte Komplexität der Bedienführung als Hürde für die Nutzung des Verfahrens angesehen werden. Zur Veranschaulichung wird als Beispiel ein System mit einer rechnergestützten Bildverarbeitung zur Objektidentifikation betrachtet. Ziel des Systems ist es, das auf einem Bild befindliche Objekt durch Vergleiche mit bereits bekannten Referenzobjekten zu identifizieren. Konventionelle Systeme dieser Art benötigen für eine Vergleichsanalyse grundsätzlich Bildmaterial mit einem möglichst auf das Motiv fokussierten Ausschnitt. Aus Gründen der Bequemlichkeit könnte der Benutzer auf die Eingrenzung des Bildausschnitts verzichten, so dass ein optimaler Vergleich nicht mehr gewährleistet werden kann. Je komplexer die Bedienführung ist, desto mehr wird dies aus der Perspektive des Benutzers als Mehraufwand wahrgenommen.

Der heutige Stand der Technik ist weniger direkt, weniger intuitiv da die Anwender zunehmend direkte Touchscreen-Interaktionsmöglichkeiten erwarten. Die Verfahren des Standes der Technik benötigen im Vergleich zu der folgend beschriebenen Erfindung mehr Bedienelemente. Zusätzlich zum Auslöser sind je nach Verfahren Bedienelemente für das Vergrößern und Verkleinern des Kameraerfassungsbereichs oder ein Bedienelement zum Aktivieren des Modus zur Auswahl eines Bildausschnitts notwendig. Sowohl bei auf dem Bildschirm eingeblendeten als auch bei physisch vorliegenden Bedienelementen muss entsprechend der Platz bereitgestellt werden. Die folgend dargestellte Erfindung benötigt keine Bedienelemente, da sie allein auf einer Geste beruht. Die verschiedenen manuellen Aktionen der Verfahren des Stands der Technik erzeugen als Gesamtheit einen höheren Zeitaufwand und eine höhere Komplexität bei der Bestimmung eines Bildausschnitts und der Auslösung der Bilderfassung.

Jede manuelle Aktion auf dem Gerät bedeutet eine mögliche Störung der Erfassung des Motivs. Die Position der Kamera könnte verfälscht oder die Aufnahme verwackelt werden. Ein höherer Zeitaufwand bedeutet eine höhere Anfälligkeit gegenüber Szenenänderungen. Bei einer sich ständig ändernden Aufnahmesituation wird das Vorhaben, das Motiv in einem bestimmten Zustand zu erfassen, durch die längere Durchführungsdauer erschwert. Ein höherer Zeitaufwand führt außerdem dazu, dass weniger Aufnahmen innerhalb eines bestimmten Zeitraums durchgeführt werden können. Eine hohe Komplexität der Bedienführung kann eine niedrigere Akzeptanz beim Benutzer bewirken. Der Benutzer könnte auf die Markierung eines bestimmten Bildausschnitts verzichten, falls diese für ihn einen Mehraufwand bedeute. Die Bereitschaft sinkt insbesondere, wenn für ihn kein unmittelbarer Vorteil ersichtlich ist. Darunter fallen Einsatzbereiche, in denen die Aufnahmen nicht für ihn bestimmt sind, sondern für andere Systeme oder Personen.

Es bestand daher ein starkes Bedürfnis, Vorrichtungen, Systeme oder Verfahren bereitzustellen, welche die Nachteile des Standes der Technik nicht aufweisen.

Es war völlig überraschend, dass die erfindungsgemäßen Mittel und Verfahren die genannten Nachteile des Standes der Technik nicht aufweisen. Die erfindungsgemäßen Mittel und Verfahren werden durch den Hauptanspruch und durch die unabhängigen Ansprüche definiert. Vorteilhafte Ausführungsformen der Erfindung ergeben sich durch die Unteransprüche.

Es war völlig überraschend, dass eine Methode zur Bestimmung eines Bildausschnittes und Durchführung einer Bilderfassung mit einer Kamera, aufweisend einen Bildschirm und eine berührungsempfindliche Oberfläche mit Multi-Touch-Funktion, mittels einer einzigen berührungsbasierten Geste die Nachteile des Standes der Technik nicht aufweist, wobei a) die Kamera auf ein Motiv gerichtet und b) ein Bild des Motivs auf dem Bildschirm angezeigt, c) der gewünschte Bereich des Motivs mit der berührungsbasierten Geste auf der genannten Oberfläche markiert und die Bilderfassung durch Beenden der genannten Geste ausgelöst wird.

Im Sinne der Erfindung bezeichnet der Begriff Bild allgemein einen zweidimensionalen Satz von Pixeln, die eine zweidimensionale Ansicht eines Gegenstandes auf einer Bildebene, bevorzugt auf der berührungsempfindlichen Oberfläche mit Multi-Touch-Funktion, bilden.

Im Zusammenhang mit der Erfindung ist Bildschirm mit Multi-Touch-Funktion ein kombiniertes Ein- und Ausgabegerät, bei dem durch Berührung von Teilen eines Bildes der Programmablauf eines technischen Gerätes, meist eines Computers, direkt gesteuert werden kann. Das Bild, welches durch das darauf oder darunter befindliche Touchpad berührungsempfindlich gemacht wird, kann auf verschiedene Weise erzeugt werden: dynamisch mittels Monitoren, über Projektion oder physikalisch.

Im Sinne der Erfindung sollen Begriffe wie Bild, Multi-Touch-Funktion, Kamera, Motiv in ihrer Verwendung zur Beschreibung von Aspekten der Erfindung allgemein vielfältige Techniken bezeichnen, die im Zusammenhang mit der Bilderfassung und des Auslösens von Bildaufnahmen zum Einsatz kommen können, um Bilder mit einer Kamera aufzunehmen und zu verarbeiten. Zu jedem Element der erfindungsgemäßen Lehre, insbesondere der Vorrichtungen, kann auch jede physische Hardware im Zusammenhang mit der Aufnahme von Motiven und ihrer Verarbeitung gehören. Somit sollen Begriffe wie Bilderfassung, Bildausschnitt, berührungsbasierte Geste, Multi-Touch-Funktion, Kamera und andere weit gefasst interpretiert werden, sofern keine spezifischere Bedeutung anderweitig angegeben ist oder aus dem Kontext hervorgeht.

Die Erfindung betrifft daher in einem Aspekt die Verwendung eines Bilderfassungsgerätes zur Aufnahme eines Bildes von einem Motiv, so dass unterschiedliche gewünschte Motive ohne deren Umgebung erfasst werden können. Dabei werden die Bestimmung des Bildausschnittes und die Auslösung der Bilderfassung mittels einer einzigen berührungsbasierten Geste durchgeführt. Ein wesentlicher Bestandteil der erfindungsgemäßen Lehre ist daher ein Bilderfassungsgerät mit einer Kamerafunktion, des weiteren ein Bildschirm und eine berührungsempfindliche Oberfläche mit Multi-Touch-Fähigkeit. Als Multi-Touch-Fähigkeit wird insbesondere die Fähigkeit verstanden, gleichzeitig mehrere Berührungen - beispielsweise mittels zweier Finger - zu erkennen und verarbeiten zu können. Die gleichzeitig mehreren Berührungen werden bevorzugt als berührungsbasierte Gesten von Fingern realisiert. Der Bildschirm dient zur Anzeige des Bilderfassungsbereiches und gibt dem Benutzer die Möglichkeit, Effekte insbesondere seiner Gesten unmittelbar nachzuverfolgen.

In einer bevorzugten Ausführungsform der Erfindung ist der Bildschirm mit der berührungsempfindlichen Oberfläche direkt miteinander kombiniert. D. h., die berührungsempfindliche Oberfläche liegt direkt auf dem Bildschirm und ist mit diesem gekoppelt. Denkbar wären allerdings auch Versionen des Bilderfassungsgerätes, bei dem die berührungsempfindliche Oberfläche nicht direkt auf dem Bildschirm liegen muss.

In einer weiteren bevorzugten Ausführungsform der Erfindung ist vorgesehen, dass die berührungsbasierte Geste mittels mindestens zweier Finger, bevorzugt von einer einzigen Hand durchgeführt wird. Der Benutzer hat die Möglichkeit, die Veränderung des Bildausschnittes durch die berührungsbasierten Gesten mittels bevorzugt mindestens zweier Finger unmittelbar und direkt zu steuern und zu korrigieren.

In einer weiteren bevorzugten Ausführungsform der Erfindung berühren bei zwei Fingern die beiden Finger die genannte Oberfläche an zwei Punkten P1 und P2 und die Position der Punkte wird durch einen Auswahlrahmen in Form einer geometrischen Figur, vorzugsweise eines Rechteckes, miteinander verbunden, wobei die Position und die Größe des Auswahlrahmens durch die Berührungspunkte bestimmt wird. Der Auswahlrahmen kann jede geometrische Figur wie einen Kreis, ein Sechseck, ein Dreieck oder andere Figuren einnehmen, wobei allerdings Rechtecke bevorzugt sind.

In einer weiteren bevorzugten Ausführungsform der Erfindung ist vorgesehen, dass nach Erreichen der gewünschten Markierung die Auslösung der Bildaufnahme erfolgt, indem der Benutzer seine Finger von der berührungsempfindlichen Oberfläche hebt, wobei das Heben der Finger im Wesentlichen gleichzeitig erfolgt und wobei der Zeitraum zwischen dem Heben des ersten und des letzten Fingers weniger als eine Sekunde beträgt, bevorzugt weniger als 300 Millisekunden.

Gemäß der genannten bevorzugten Ausführungsformen der Erfindung kann der Benutzer das erfindungsgemäße Verfahren beginnen, indem er die Kamerafunktion des Bilderfassungsgerätes startet und die Kamera auf das relevante Motiv richtet. Hierbei wird das Kamerabild auf dem Bildschirm des Gerätes angezeigt. Der Benutzer kann nun beispielsweise mittels zweier Finger per berührungsbasierter Geste einen bestimmten Bereich auf der berührungsempfindlichen Oberfläche mit Multi-Touch-Funktion markieren, indem er mit seinen Fingern die genannte Oberfläche berührt. Auf dem Bildschirm wird zwischen den beiden Punkten, an denen die Finger die Oberfläche berühren, ein Auswahlrahmen in Form einer geometrischen Figur gespannt, wobei die Finger das Ausmaß des Rahmens definieren und somit begrenzen. Die Position und die Ausdehnung des Auswahlrahmens werden durch die relative Position der Finger bestimmt. So lange die Berührung besteht, kann durch das Verschieben der Finger der Auswahlrahmen entsprechend der Anforderungen des Benutzers skaliert werden. Dadurch kann eine genaue Markierung des gewünschten Bildausschnittes erreicht werden. Mithilfe des Auswahlrahmens kann eine Autofokusfunktion auf den gewünschten Bereich begrenzt werden, wenn die entsprechende Funktionalität vom jeweiligen Gerät und Betriebssystem bereitgestellt werden. Dabei wird die Position des Autofokusbereichs auf den Mittelpunkt des Auswahlrahmens gelegt. Mit der gezielten Fokussierung kann eine schärfere Abbildung des gewünschten Motivs erreicht werden. Ist der gewünschte Bildausschnitt markiert, wird die Bildaufnahme durch das Heben der Finger von der berührungsempfindlichen Oberfläche ausgelöst.

Hierbei kann es beispielsweise in einer bevorzugten Ausführungsform der Erfindung vorgesehen sein, dass x1 und y1 die Koordinaten des ersten Berührungspunktes P1 und x2 und y2 die Koordinaten des zweiten Berührungspunktes P2 sind und die beiden Punkte als gegenüberliegende Eckpunkte des bevorzugt einzublendenden Rechtecks darstellen, wobei die restlichen zwei Eckpunkte P3 und P4 mithilfe der Koordinaten der bekannten Eckpunkte mittels P3 (x1; y2) und P4 (x2; y1) visuell, insbesondere als Linien, dargestellt werden.

In einer weiteren bevorzugten Ausführungsform der Erfindung ist vorgesehen, dass durch das Auslösen der Bildaufnahme die Weiterverarbeitung der von der Kamera abgerufenen Bilddaten und des Auswahlrahmens erfolgt, wobei der Auswahlrahmen zum Erzeugen des Bildausschnittes verwendet wird.

Weiterhin ist es bevorzugt, wenn bei Vorliegen des Auswahlrahmens die Autofokusfunktion auf den gewünschten Bereich angewendet wird, wobei die Position des Autofokus auf den Mittelpunkt des Auswahlrahmens gelegt wird.

Im Sinne der Erfindung können Bilderfassungsgeräte alle EDV-Systeme sein, wie Mobiltelefone, Personal Digital Assistants (PDA), Smartphones, PCs, programmierbare Unterhaltungselektronik, Digitalkameras, Minicomputer, Laptopgeräte etc.. Diese Bilderfassungsgeräte können einen automatischen Fokus-Mechanismus zur automatischen Anpassung von Fokuseinstellungen besitzen. Der automatische Fokus - auch Autofokus genannt - ist eine Technik in optischen Apparaten, die es ermöglicht, auf das Motiv scharf zu stellen. Im Sinne der Erfindung wird durch den Begriff des Autofokus sowohl der passive als auch der aktive Autofokus erfasst. Selbstverständlich kann es im Sinne der Erfindung auch vorgesehen sein, dass die Scharfstellung des Motivs durch einen manuell zu bedienenden Fokus erfolgt. Ziel des automatischen oder manuellen Fokus ist die Fokussierung der Linse mittels eines Computers, der mit einem Minimotor assoziiert vorliegt. Die Fokussierung erfolgt durch die Bewegung des Objektivs so lange, bis die jeweils schärfsten Bilder des Motivs auf einen Bildsensor bzw. die berührungsempfindliche Oberfläche projiziert werden.

Oberflächen mit Multi-Touch-Funktion können Bildschirme mit resistiven Touchscreens sein, wie sie in Tablet PCs, Electronic Organizer, PDAs oder Handys/Smartphones verarbeitet werden. Weiterhin ist die Verwendung von kapazitiven Touchscreens möglich, wie sie in Smartphones wie dem Apple iPhone, iPad oder dem HTC Dream oder Microsofts Zune HD bzw. Motorola Backflip, Palm Pre und Samsung Galaxy genutzt werden. Außerdem ist die Verwendung optischer Touchscreens möglich bzw. der Einsatz induktiver Touchscreens.

Die Erfindung betrifft auch das maschinenimplementierte Verfahren zur Bestimmung eines Bildausschnittes und zur Durchführung einer Bilderfassung mit einer Kamera. Weiterhin betrifft die Erfindung ein maschinenlesbares Medium mit einem ausführbaren Computerprogramm, welches die Bestimmung eines Bildausschnittes und die Durchführung einer Bilderfassung mit einer Kamera im Sinne der Erfindung erlaubt. Das maschinenimplementierte Verfahren sowie das maschinenlesbare Medium mit dem ausführbaren Computerprogramm weisen die für das Verfahren beschriebenen Vorrichtungsmerkmale wie Kamera, Bildschirm, berührungsempfindliche Oberfläche mit Multi-Touch-Funktion sowie weitere im Stand der Technik bekannten Elemente für Bilderfassungsgeräte, wie sie z. B. für Smartphones bekannt sind, auf.

Im Folgenden soll die Erfindung anhand eines Beispiels etwas näher erläutert werden, ohne auf dieses Beispiel beschränkt zu sein.

Als Beispiel wird ein Server-Client-System mit einer rechnergestützten Bildverarbeitung zur Objektidentifikation betrachtet. Der Server ist eine Applikation, welches die Objektidentifikation als Dienst anbietet und zentral über einen Rechner von anderen Applikationen, den Clients, angesprochen wird. Die Objektidentifikation basiert auf dem Vergleich der zu untersuchenden Objektabbildung (Anfragebild), mit bereits bekannten Objektabbildungen (Referenzbilder). Dazu werden aus den Referenzbildern, die für eine Suche relevanten Informationen extrahiert und in einer Datenbank abgelegt. Neben der Datenbank und den Algorithmen für die Bildsuche besitzt der Server Methoden für die Kommunikation zwischen Server und Clients.

Über einen Client können Benutzer Anfragebilder generieren und für die Bildsuche an den Server weiterleiten. Voraussetzung für die Generierung der Anfragebilder ist das Vorhandensein einer Kamerafunktion auf dem Bilderfassungsgerät, auf dem die Client-Applikation ausgeführt wird. Für die Erfindung ist außerdem eine berührungsempfindliche Oberfläche mit Multi-Touch-Fähigkeit, die über Finger zu bedienen ist, erforderlich. Als Multi-Touch-Fähigkeit wird die Fähigkeit des Geräts verstanden, gleichzeitig mehrere Berührungen zu erkennen und verarbeiten zu können. Zur Erfassung von Bildern wird daher ein Mobiltelefon eingesetzt, welches eine Kamera und einen berührungsempfindlichen Bildschirm mit Multi-Touch-Fähigkeit besitzt. Der Bildschirm des Mobiltelefons dient zur Anzeige der Bilddaten und der grafischen Elemente für die Bedienführung. Zum Senden von Daten an den Server und zum Empfangen von Daten vom Server werden die vom Mobiltelefon bereitgestellten Kommunikationswege benutzt. Das auf dem Mobiltelefon laufende Betriebssystem stellt dabei sämtliche Funktionen zur Verfügung, die von Applikationen zur Ansteuerung der eingebauten Hardware verwendet werden können.

Zum Generieren von Anfragebildern wird die Client-Applikation auf dem Mobiltelefon gestartet. Die Applikation befindet sich nun im Aufnahmemodus und ruft über eine vom Betriebssystem bereitgestellte Funktion permanent Bilddaten von der Kamera ab, um diese in Echtzeit auf dem Bildschirm anzuzeigen. Überdies werden die Eingabedaten der berührungsempfindlichen Oberfläche im Aufnahmemodus von der Client-Applikation im Hintergrund ständig abgefragt und verarbeitet. Die Eingabedaten umfassen die Anzahl der Berührungspunkte, die kartesischen Koordinaten auf dem Bildschirm zu dem jeweiligen Berührungspunkt und das Berührungsereignis. Durch die Kopplung des Bildschirms und der berührungsempfindlichen Oberfläche entsprechen in den meisten Mobiltelefonen die Koordinaten der Berührungspunkte den Koordinaten auf dem Bildschirm. Mögliche Berührungsereignisse können folgende sein: Start der Berührung, Positionsänderung der Berührung, Beenden der Berührung durch Heben des Fingers.

Der Benutzer kann nun die Kamera auf ein bestimmtes Motiv richten, so dass das Motiv auf dem Bildschirm erscheint. Zur Auswahl eines Bildausschnitts führt der Benutzer eine Geste aus, indem er mit seinen Fingern zwei Stellen auf dem Bildschirm berührt, die um das relevante Motiv herum liegen. Sobald das Gerät eine Berührung von genau zwei Stellen durch den Benutzer auf der Oberfläche eindeutig registriert und diese Information durch die Applikation abgerufen wurde, wird auf Basis der beiden Berührungspunkte ein Auswahlrahmen in Form eines Rechtecks auf den Bildschirm gespannt. Die Position und Größe des Auswahlrahmens wird folglich durch die Berührungspunkte bestimmt. Seien X₁ und Y₁ die Koordinaten des ersten Berührungspunkts P₁ und x₂ und y₂ die Koordinaten des zweiten Berührungspunkts P₂. Die beiden Stellen werden als gegenüberliegende Eckpunkte des einzublendenden Rechtecks betrachtet. Die restlichen zwei Eckpunkte P₃ und P₄ werden mit Hilfe der Koordinaten der bekannten Eckpunkte wie folgt ermittelt: *P₃(X₁;Y₂)* und *P₄(x₂; y₁).* Zur visuellen Darstellung des Auswahlrahmens werden zum Beispiel gestrichelte Linien zwischen den Eckpunkten angezeigt. Zum Einzeichnen der grafischen Elemente verwendet die Client-Applikation die vom Betriebssystem vorgesehenen Methoden. Bei Vorliegen des Auswahlrahmens kann die Autofokus-Funktion auf den ausgewählten Bereich angewendet werden, wenn das Gerät und das Betriebssystem die entsprechende Funktionalität anbietet. Dabei wird die Position des Fokusbereichs auf den Mittelpunkt des Auswahlrahmens gelegt. Durch die Einblendung des Auswahlrahmens kann der Benutzer seine Markierung überprüfen und bei Bedarf korrigieren. Sollte eine Nachjustierung des Auswahlrahmens notwendig sein, kann der Benutzer den Auswahlrahmen durch das Bewegen seiner Finger und damit der Berührungspunkte anpassen. Die Positionsänderung der Berührungspunkte werden von der Oberfläche registriert, woraufhin die Applikation eine Anpassung der Anzeige mit den neuen Koordinaten vornimmt. Nach Erreichen der gewünschten Markierung wird die Auslösung der Bildaufnahme angestoßen, indem der Benutzer seine Finger von der berührungsempfindlichen Oberfläche hebt. Das Heben der beiden Finger muss nahezu gleichzeitig erfolgen, wobei der Zeitraum zwischen dem Heben des ersten Fingers und dem des zweiten Fingers 300 ms betragen kann. Außerhalb des Zeitraumes werden die Hebebewegungen nicht als gleichzeitig angesehen und der Auswahlprozess abgebrochen. Ein Abbruch des Auswahlprozesses kann auch erfolgen, wenn nicht genau zwei Berührungspunkte existieren, z.B. durch Berühren der Oberfläche mit mehr als zwei Fingern oder durch einen zu geringen Abstand zwischen den beiden Berührungspunkten, so dass die berührungsempfindliche Oberfläche nicht eindeutig zwei Berührungspunkte registrieren kann. Aufgrund der einfachen und ineinandergreifenden Bildausschnittsbestimmung und Aufnahmeauslösung ist eine Ausführungszeit von wenigen Millisekunden möglich.

Nach Auslösen der Bildaufnahme durch das Ausführen einer vom Betriebssystem vorgesehenen Methode erhält die Client-Applikation die Bilddaten der Kamera. Mittels der Koordinaten des Auswahlrahmens extrahiert die Applikation den entsprechenden Bildausschnitt aus dem aufgenommenen Bild. Auch hierfür ruft die Applikation eine vorhandene Methode des Betriebssystems auf oder verwendet eine eigene Methode zum Ausschneiden von Bilddaten aus einem vorgegebenen Bereich. Der Bildausschnitt wird danach zum Abgleich mit den bekannten Referenzobjekten an den Server gesendet. Beim Vorliegen eines Ergebnisses wird die Client-Applikation entsprechend benachrichtigt.

Das beschriebene System verwendet spezielle Algorithmen für den effizienten und zuverlässigen Vergleich von Bildern. Dazu werden aus Bildern die für einen Vergleich notwendigen Merkmale extrahiert. Für die Identifikation von Objekten dienen als Grundlage Objektabbildungen, die möglichst keinen Hintergrund enthalten und keine sonstigen Bildelemente, die nicht Teile des Objekts repräsentieren. Somit kann sichergestellt werden, dass ausschließlich die Merkmale des betrachteten Objekts berücksichtigt werden. In dem Kontext des beschriebenen Systems werden solche Objektabbildungen als qualitativ hochwertig bezeichnet. Das bedeutet, dass die Verwendung von hochwertigen Bildern die Erkennungsrate des Systems erhöhen kann. Es ist daher wichtig, dass Bilder von Motiven ohne störende Umgebungselemente erzeugt werden. Mit dem vorgestellten Verfahren über eine berührungsbasierte Geste kann diese Anforderung durch den Benutzer leicht erfüllt werden.

Die Erfindung bzw. vorteilhafte Ausführungsformen der Erfindung werden im Folgenden anhand von Figuren dargestellt.

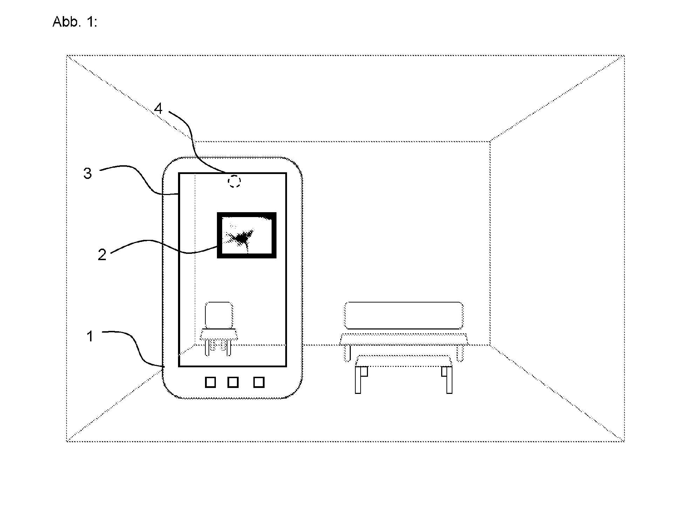

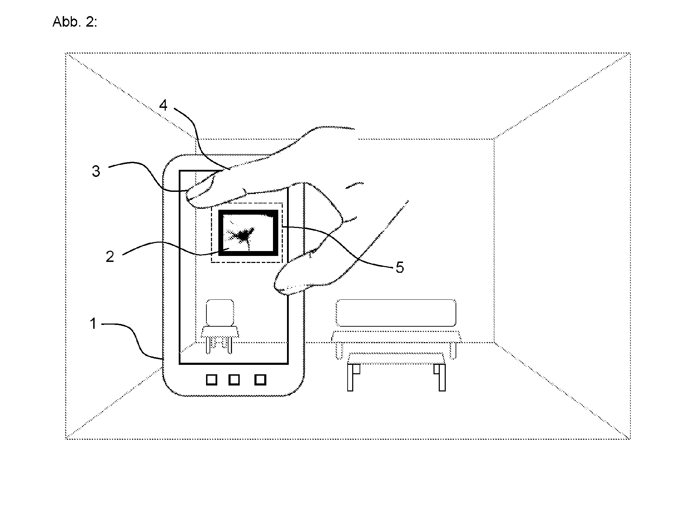

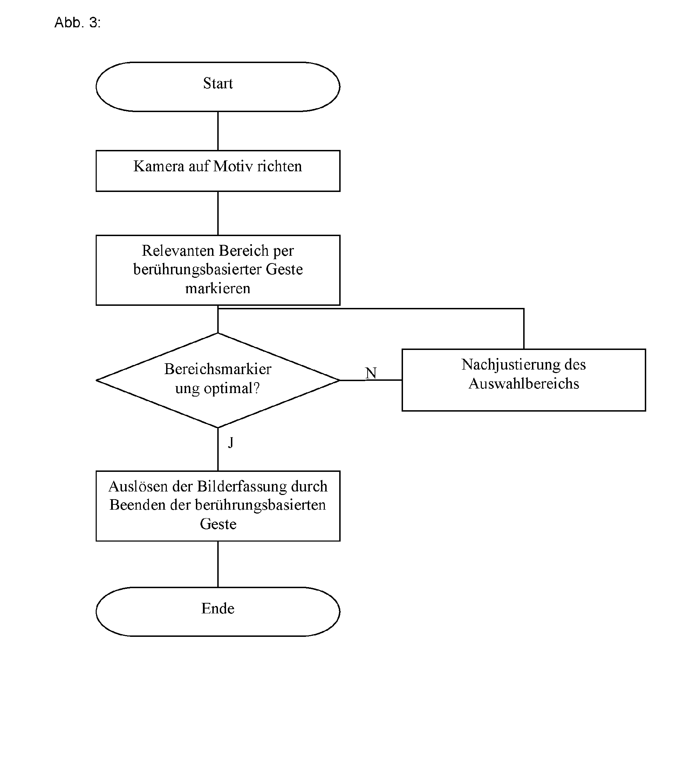

Abb. 1 zeigt ein Bilderfassungsgerät (1) sowie das Motiv (2), den Kameraerfassungsbereich (3) sowie die Kamera (4). In Abb. 1 ist dargestellt, dass der Benutzer die Kamera auf das von ihm gewünschte Motiv gerichtet hat und das Kamerabild auf dem Bildschirm des Gerätes angezeigt wird (2). Wie in Abb. 2 dargestellt, kann der Benutzer nun per berührungsbasierter Geste mittels zweier Finger einen bestimmten Bereich markieren, indem er mit den zwei Fingern äußere Bereiche des Motivs berührt und somit den Auswahlrahmen (5) spannt, wobei die Finger das Ausmaß des Rahmens begrenzen. Die Position und die Ausdehnung des Auswahlrahmens werden durch die relative Position der Finger bestimmt. Wenn der gewünschte Bildausschnitt markiert ist, werden die beiden Finger von der berührungsempfindlichen Oberfläche gehoben, wodurch die Bildaufnahme ausgelöst wird. Dieser Vorgang wird auch noch einmal in der Übersichtsdarstellung gemäß Abb. 3 illustriert.

Die folgende Zusammenfassung und die o. g. Ausführungsformen enthalten keine erschöpfende Darstellung aller Aspekte der vorliegenden Erfindung. Es ist vorgesehen, dass die Erfindung alle Systeme und Methoden, die der Fachmann als gleichwirkend erkennt und die beispielsweise eine Kombination der verschiedenen o. g. Aspekte darstellen, umfasst.

## Patentansprüche

1. Methode zur Bestimmung eines Bildausschnitts und Durchführung einer Bilderfassung mit einer Kamera, aufweisend einen Bildschirm und eine berührungsempfindliche Oberfläche mit Multi-Touch-Funktion, mittels einer einzigen berührungsbasierten Geste,
**dadurch gekennzeichnet, dass**
a) die Kamera auf ein Motiv gerichtet und b) ein Bild des Motivs auf dem Bildschirm angezeigt, c) der gewünschte Bereich des Motivs mit der berührungsbasierten Geste auf der genannten Oberfläche markiert und die Bilderfassung durch Beenden der genannten Geste ausgelöst wird.

2. Methode nach dem vorhergehenden Anspruch,
**dadurch gekennzeichnet, dass**
die berührungsbasierte Geste mittels mindestens zweier Finger, bevorzugt von einer einzigen Hand, durchgeführt wird.

3. Methode nach einem der vorhergehenden Ansprüche,
**dadurch gekennzeichnet, dass**
bei zwei Fingern die beiden Finger die genannte Oberfläche an zwei Punkten (P1 und P2) berühren und die Position der Punkte durch einen Auswahlrahmen in Form einer geometrischen Figur, vorzugsweise eines Rechteckes, miteinander verbunden werden, wobei die Position und Größe des Auswahlrahmens durch die Berührungspunkte bestimmt wird.

4. Methode nach dem vorhergehenden Anspruch,
**dadurch gekennzeichnet, dass**
x1 und y1 die Koordinaten des ersten Berührungspunkts P1 und x2 und y2 die Koordinaten des zweiten Berührungspunkts P2 sind und beide Punkte als gegenüberliegende Eckpunkte das einzublendende Rechteck darstellen, wobei die restlichen zwei Eckpunkte P3 und P4 mit Hilfe der Koordinaten der bekannten Eckpunkte mittels P3(x1;y2) und P4(x2;y1 ) visuell, insbesondere als gestrichelte Linien, dargestellt werden.

5. Methode nach einem der vorhergehenden Ansprüche,
**dadurch gekennzeichnet, dass**
der Bildschirm mit der berührungsempfindlichen Oberfläche direkt miteinander kombiniert vorliegt.

6. Methode nach dem vorhergehenden Anspruch,
**dadurch gekennzeichnet, dass**
nach Erreichen der gewünschten Markierung die Auslösung der Bildaufnahme erfolgt, indem der Benutzer seine Finger von der berührungsempfindlichen Oberfläche hebt, wobei das Heben der Finger im wesentlichen gleichzeitig erfolgt, wobei der Zeitraum zwischen dem Heben des ersten und des letzten Fingers weniger als 1 s beträgt.

7. Methode nach dem vorhergehenden Anspruch,
**dadurch gekennzeichnet, dass**
nach Auslösen der Bildaufnahme die Weiterverarbeitung der von der Kamera abgerufenen Bilddaten und des Auswahlrahmens erfolgt, wobei der Auswahlrahmen zum Erzeugen des Bildausschnitts verwendet wird.

8. Methode nach einem der vorhergehenden Ansprüche,
**dadurch gekennzeichnet, dass**
bei Vorliegen des Auswahlrahmens die Autofokus-Funktion auf den gewünschten Bereich angewendet werden kann, wobei die Position des Fokusbereichs auf den Mittelpunkt des Auswahlrahmens gelegt wird.
